# EUROPÄISCHE PATENTSCHRIFT

(11) **EP 3 334 514 B1**
(45) Veröffentlichungstag und Bekanntmachung des Hinweises auf die Patenterteilung: **08.09.2021**
(21) Anmeldenummer: 16731799.9
(22) Anmeldetag: 14.06.2016
(51) Int. Cl.: B01D 35/31, B01D 29/90, B01D 29/92

(54) **FILTERVORRICHTUNG**
FILTER DEVICE
DISPOSITIF FILTRANT

(30) Priorität: 12.08.2015 DE 102015010533
(43) Veröffentlichungstag der Anmeldung: 20.06.2018
(73) Patentinhaber: Hydac Filtertechnik GmbH, 66280 Sulzbach/Saar (DE)
(72) Erfinder: FIEDLER, Sebastian, 66583 Spiesen-Elversberg (DE)
(74) Vertreter: Bartels und Partner, Patentanwälte
(86) Internationale Anmeldenummer: PCT/EP2016/000982
(87) Internationale Veröffentlichungsnummer: WO 2017/025160

(56) Entgegenhaltungen:
- WO-A1-2011/060254
- WO-A1-2013/053482
- WO-A1-2015/086440
- JP-U- S60 195 916
- US-A1- 2009 218 295
- US-A1- 2012 248 024

## Beschreibung

Die Erfindung betrifft eine Filtervorrichtung zum Filtern von Fluid, insbesondere in Form einer wässrigen Harnstofflösung, gemäss Anspruch 1.

WO 2015/086440 A1 betrifft einen Filter mit wässriger Lösung, wie etwa Harnstoff, für eine Einrichtung zur selektiven katalytischen Reduktion von Dieselfahrzeugen, wobei der Filter ein Gehäuse enthält, das mit einem Einlass und einem Auslass versehen ist und in dessen Inneren ein Filterelement angeordnet ist, sowie mit einer Detektionsvorrichtung zum Erfassen von Volumenänderungen im Zusammenhang mit Phasenwechsel der wässrigen Lösung, wobei der Filter ferner mit Signalisierungsvorrichtungen zum Signalisieren der Volumenänderungen der Phase der wässrigen Lösung versehen ist, wobei die Signalisierungsmittel einen Schalter enthalten, der bei Phasenwechsel umschaltet. Die Signalisierungsvorrichtungen enthalten ferner eine verformbare Membran, die mit dem Schalter zusammenwirkt, um einen Phasenwechsel zu signalisieren. Die Membran definiert eine Expansionskammer für die Volumenänderungen, wobei die Kammer mit einem Gas oder einem weichen Schaum gefüllt ist.

WO 2011/060254 A1 offenbart eine Filtervorrichtung, aufweisend ein Filtergehäuse, wobei das Filtergehäuse konfiguriert ist, um ein Filterelement zur Filtration einer Flüssigkeit aufzunehmen, wobei die Flüssigkeit eine wässrige Harnstofflösung ist; und ein kompressibles Element, das innerhalb des Filtergehäuses angeordnet ist, wobei das kompressible Element eine Umfassungswand aufweist, die ein erstes Volumen definiert, wobei die Umfassungswand des kompressiblen Elements ein Elastomermaterial aufweist. Dabei ist das kompressible Element als Hohlkörper ausgeführt, innerhalb dessen sich ein Gas befindet. Das kompressible Element wird durch eine Halteklammer an der unteren Endkappe gehalten.

Durch die DE 10 2012 020 431 A1 ist eine Filtervorrichtung mit mindestens einem von einem abzureinigenden Fluid mit vorgebbarem Fluidbetriebsdruck durchströmbaren, in einem Gehäuse aufnehmbaren Filterelement bekannt, wobei der am jeweiligen Filterelement herrschende Fluiddruck das jeweilige Filterelement, insbesondere dessen Filtermaterial, schädigende Druckspitzen oder generelle Druckerhöhungen aufweisen kann, die mittels einer auf das jeweilige Filterelement direkt einwirkenden Ausgleichseinrichtung reduzierbar und/oder glättbar sind, die mindestens ein nachgiebiges Ausgleichselement aufweist, das entsprechend einer Druckspitze oder Druckerhöhung eine Vergrößerung des Volumens des Fluidraums des Gehäuses ermöglicht. Bei der bekannten Lösung ist das nachgiebige Ausgleichselement stromaufwärtig zwischen der Außenseite des Filtermaterials des Filterelements und der benachbarten Innenwand des Gehäuses angeordnet, d.h. die Fluidführung zwischen Ausgleichs- und Filterelement ist an den Fluideinlass angeschlossen und somit die Zufuhr von Fluid stromaufwärtig angeordnet, wohingegen das über das Filterelement abgereinigte Fluid stromabwärtig über eine mittig angeordnete Endkappenöffnung aus der Filtervorrichtung abgeführt wird.

Bei der Lösung nach der DE 10 2012 020 431 A1 ist das nachgiebige Ausgleichselement in der Art eines Einsatztopfes in das Gehäuse der Filtervorrichtung ausgebildet und besteht bevorzugt aus einem Zell-Kautschuk-Material. Mit der bekannten Lösung ist es auch möglich, die beim Gefrieren einer wässrigen Harnstofflösung, wie sie bei sog. SCR-Abgassystemen insbesondere in der Automobiltechnik zur Anwendung kommt, deren Volumenzunahme über das Zell-Kautschuk-Ausgleichselement zu kompensieren, um dergestalt durch die Volumenzunahme bedingt schädigende Druckeinflüsse auf das empfindliche Filterelementmaterial vermeiden zu helfen, was ansonsten zur Funktionsunfähigkeit der Filtervorrichtung führen könnte, insbesondere wenn durch das Gefrieren des Fluidmaterials das Filterelementmaterial einen Riss oder dergleichen erfährt. Wegen des verhältnismäßig steifen Materialverhaltens des für das Ausgleichselement eingesetzten Zell-Kautschuks ist die Ausgleichseinrichtung der bekannten Filtervorrichtung zwar geeignet, um, als Pulsationsdämpfer wirkend, schnelle Druckspitzen zu glätten oder abzumildern, ist jedoch kaum geeignet, die Volumenzunahme zu kompensieren, wie sie bei der Filtration wässriger Harnstofflösungen im Falle des Gefrierens auftritt.

Die US 2009/0218295 A1 beschreibt Filtervorrichtung zum Filtern von Fluid, insbesondere in Form einer wässrigen Harnstofflösung, mit den Merkmalen im Oberbegriff von Anspruch 1 mit einem Filtergehäuse und einem darin angeordneten Filterelement sowie einem Ausgleichselement zum Kompensieren von Druck- und/oder Volumenschwankungen des Fluids, wobei als Ausgleichselement mindestens eine elastisch nachgiebige Membran eingesetzt ist, deren Membranwand in einem Halteteil gehalten eine Trennung zwischen dem Fluid und einem kompressiblen Befüllmedium, wie einem Arbeitsgas, vornimmt.

Die US 2012/0248024 A1 offenbart eine Filtervorrichtung mit einem Ausgleichselement zum Kompensieren von Druckschwankungen des Fluids.

Ausgehend von dieser Problematik stellt sich die Erfindung die Aufgabe, eine Filtervorrichtung der eingangs genannten Gattung zur Verfügung zu stellen, bei der das Ausgleichselement einen besonders effektiven und sicheren Gefrierschutz bei einem Betrieb mit gefrierbaren Fluiden, wie einer wässrigen Harnstofflösung, zur Verfügung stellt.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass das Halteteil eine Fülleinrichtung in Form eines Füllventils für das kompressible Befüllmedium aufweist.

Überdies ist erfindungsgemäß vorgesehen, dass als Ausgleichselement mindestens eine elastisch nachgiebige Membran eingesetzt ist, deren Membranwand in einem Halteteil gehalten eine Trennung zwischen dem Fluid und einem kompressiblen Befüllmedium, wie einem Arbeitsgas, vornimmt. In besonders vorteilhafter Weise ist dadurch eine Ausgleichseinrichtung in Form eines Membranspeichers realisiert, der, bei an den Betriebs-Fluiddruck angepasstem Fülldruck des Befüllmediums, wie dem Arbeitsgas, die im Gefrierfall erforderliche Volumenzunahme ohne das Filterelement schädigende, stärkere Druckerhöhung ermöglicht.

Da das Ausgleichselement bei der bekannten Lösung, wie dargelegt, innerhalb des Gehäuses der Filtervorrichtung stromaufwärts, also auf der Unfiltratseite, angeordnet ist, nimmt es relativ viel Bauraum im Filtergehäuse ein. In vorteilhafter Weise kann die Anordnung bei der erfindungsgemäßen Filtervorrichtung derart getroffen sein, dass die Membran auf der stromabwärtigen Filtratseite des Filterelements angeordnet ist. Dadurch, dass dergestalt die gesamte Ausgleichseinrichtung, also Membran einschließlich des kompressiblen Befüllmediums, wie Arbeitsgas, in den vom Filtermedium umgebenen Gehäuseinnenraum verlegt ist, trägt die Ausgleichseinrichtung nicht zur Vergrößerung des Außenumfangs des die Außenseite des Filtermediums umgebenden Filtergehäuses bei.

Mit besonderem Vorteil kann die Membran schalen-, kalotten- oder kuppelartig ausgebildet sein und aus Ethylen-Propylen-Dien-Kautschuk (EPDM) oder aus hydriertem Acrylnitrilbutadien-Kautschuk (HNBR) bestehen. Diese Werkstoffe eignen sich besonders für Filtervorrichtungen für aggressive Fluide, wie wässrige Harnstofflösungen. Es versteht sich, dass für andere Anwendungen Nitril-Butadien-Kautschuk oder andere Elastomere benutzt werden können. Für eine besonders sichere Verankerung der Membran kann an deren Rand eine Verdickung vorgesehen sein, die in eine zuordenbare Ausnehmung am Halteteil formschlüssig eingreift.

Mit besonderem Vorteil kann eine schalenförmige Membran vorgesehen sein, die in vergleichbarer Bauweise auch bei einer Membran Verwendung findet, wie sie bei Membran-Hydrospeichern benutzt wird. Durch die Möglichkeit, als Membran ein Gleichbauteil einzusetzen, wie es bereits als Fertigprodukt für die Speicherherstellung zur Verfügung steht, lässt sich die erfindungsgemäße Filtervorrichtung besonders kostengünstig herstellen.

Ausführungsbeispiele, bei denen der Außenkontur der jeweiligen Membran im Wesentlichen nachfolgend auf deren Außenseite ein zumindest teilweise fluiddurchlässiger Stützkörper angeordnet ist, zeichnen sich durch eine besonders hohe Betriebssicherheit über eine lange Betriebslebensdauer aus.

Bei besonders vorteilhaften Ausführungsbeispielen weist das Ausgleichselement zwei gleich ausgebildete Membranen auf, die auf gegenüberliegenden Seiten des Halteteils festgelegt sind, das, als Hohlteil ausgebildet, als Befüllmedium ein Arbeitsgas, vorzugsweise in Form von Stickstoffgas, aufnimmt.

Das Ausgleichselement kann mit einem vorgebbaren radialen Abstand von einem zylindrischen Stützrohr mit Fluiddurchlässen umfasst sein, an dem sich außenumfangsseitig das Filterelement abstützt. Dieses Stützrohr kann einen Bestandteil des jeweiligen Filterelements bilden.

Dieses kann zwei Endkappen aufweisen, zwischen denen sich das vorzugsweise plissierte, mehrlagige Filtermedium erstreckt, von denen mindestens eine Endkappe zur Vermeidung von Totvolumen das Filtergehäuse zumindest teilweise, vorzugsweise bodenseitig ausfüllt und/oder die andere Endkappe von einem Aufnahmeblock für das Festlegen des Halteteils innerhalb des Filtergehäuses durchgriffen ist, der vorzugsweise temperierbar ist. Mit besonderem Vorteil eignen sich derartige Ausführungsbeispiele für einen Einsatz bei SCR-Abgassystemen, weil durch Temperieren des Aufnahmeblocks bei Betrieb der Filtervorrichtung unter Frostbedingungen sichergestellt ist, dass die wässrige Harnstofflösung durch Beheizen des Halteblocks in flüssigem Zustand verbleibt, so dass der sichere Betrieb des SCR-Abgassystems gewährleistet ist, während gleichzeitig bei Stillstandszeiten unter Frostbedingungen und bei Gefrieren der Harnstofflösung das Filterelement durch das Austauschelement gegen Beschädigung geschützt ist.

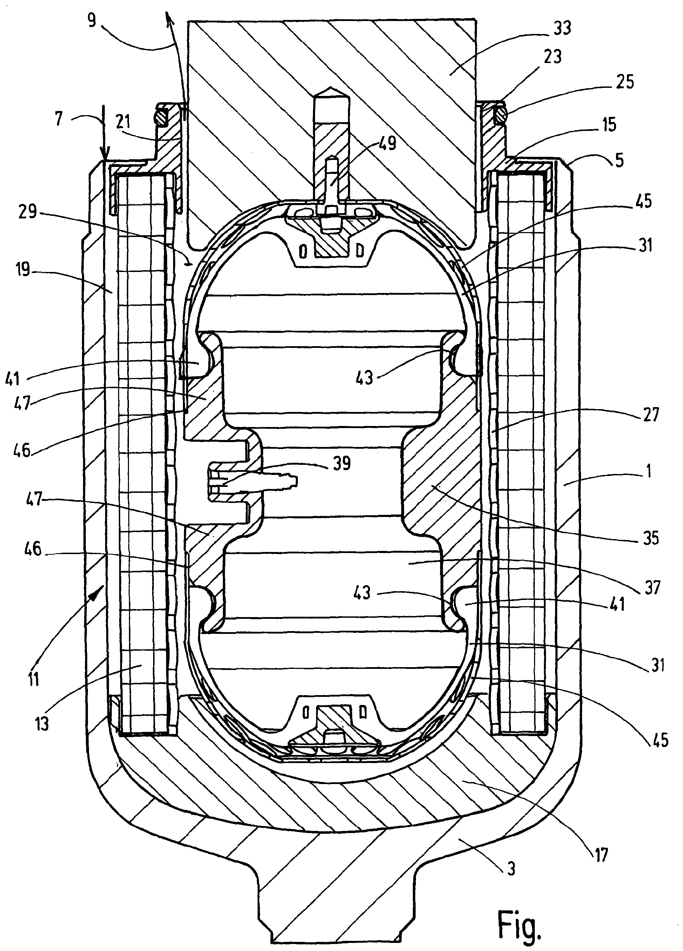

Nachstehend ist die Erfindung anhand eines in der Zeichnung dargestellten Ausführungsbeispiels im Einzelnen erläutert. Die einzige Figur der Zeichnung zeigt einen Längsschnitt des Ausführungsbeispiels, das mit vom topfartigen Filtergehäuse abgenommenem Filterkopf dargestellt ist.

Die Erfindung ist am Beispiel einer Filtervorrichtung beschrieben, die mit besonderem Vorteil bei SCR-Abgassystemen zur Filtration wässriger Harnstofflösungen einsetzbar ist. Das Ausführungsbeispiel weist ein Filtergehäuse 1 in Form eines kreiszylindrischen Topfes mit geschlossenem, gewölbtem Boden 3 und offenem, oberem Ende 5 auf. Ein am oberen Ende 5 auf das Gehäuse 1 aufschraubbarer Gehäusedeckel oder-köpf, der in der Figur weggelassen ist, weist einen Fluideinlass und einen Fluidauslass auf, um das abzureinigende Fluid über einen Eintrittsbereich, der mit einem Strömungspfeil 7 in der Figur bezeichnet ist, in das Gehäuse 1 einzuführen, und über einen Austrittsbereich 9, der mit einem Strömungspfeil 9 bezeichnet ist, aus dem Gehäuse 1 abzuführen.

In diesem ist ein Filterelement 11 herausnehmbar aufgenommen, das ein einen Hohlzylinder bildendes Filtermedium 13 aufweist, das in der bei derartigen Filtervorrichtungen üblichen Weise vorzugsweise plissiert und mehrlagig aufgebaut ist und sich zwischen einer in der Figur oben befindlichen Endkappe 15 und einer unteren Endkappe 17 erstreckt. Das Filterelement 11 ist im Gehäuse 1 derart aufgenommen, dass sich die Außenseite des Filtermediums 13 in einem Abstand von der Gehäusewand befindet, so dass ein das Filtermedium 13 umgebender Raum 19 gebildet ist, der an den Fluideinlassbereich angrenzt, der mit dem Strömungspfeil 7 bezeichnet ist und beim Filtervorgang die Rohseite oder Unfiltratseite bildet. Die untere Endkappe 17 weist eine geschlossene, verhältnismäßig großvolumige Form auf, die mit ihrer Außenseite bei eingebautem Filterelement 11 an der Innenseite des gewölbten Bodens 3 des Gehäuses 1 anliegt. Die obere Endkappe 15 hat die Form eines eine zentrale Öffnung 21 umgebenden Ringkörpers mit einem entlang der Öffnung 21 axial nach oben ragenden Stutzen 23, an dessen Außenseite sich ein O-Ring 25 befindet, der bei geschlossenem Gehäuse 1 die Abdichtung zwischen Einströmbereich (Strömungspfeil 7) und Ausströmbereich (Strömungspfeil 9) bildet.

An der Innenseite des Filtermediums 13 liegt ein Fluiddurchlässe aufweisendes Stützrohr 27 an, dessen Enden, zusammen mit den Enden des Filtermediums 13, in den eine Einfassung bildenden Endkappen 15 und 17 aufgenommen sind, wobei die Enden von Filtermedium 13 und Stützrohr 27 in den Endkappen 15 und 17 festgelegt sind, beispielsweise durch Verkleben. In dem an die Innenseite des Stützrohres 27 angrenzenden inneren Filterhohlraum 29, der die stromabwärtige Filtratseite bildet, ist eine Ausgleichseinrichtung angeordnet, die als Ausgleichselement zwei Membranen 31 aufweist. Das Volumen des inneren Filterhohlraums 29 ist an der dem Boden 3 zugewandten Unterseite durch die Endkappe 17 und am oberen Ende 5 des Filtergehäuses 1 durch ein Aufnahmeteil 33 begrenzt, das auch die Halterung für die im Filterhohlraum 29 befindliche Ausgleichseinrichtung bildet. Um das Totvolumen des Filterhohlraums 29 möglichst gering zu halten, ist die untere Endkappe 17 großvolumig ausgebildet und so geformt, dass sie die ihr zugewandte Membran 31 an deren Außenseite mit geringem Abstand umgibt und mit ihrer unteren Außenseite vollflächig am Boden 3 des Gehäuses 1 anliegt. Zur Begrenzung des Totvolumens des Raums 29 am oberen Ende ist das Aufnahmeteil 33 so geformt, dass es die obere Außenseite der oberen Membran 31 ebenfalls in nur geringem Abstand umgibt.

Wie bereits erwähnt, bildet die Ausgleichseinrichtung mit ihrem durch Membranen 31 gebildeten Ausgleichselement eine Art hydropneumatischen Membranspeicher, bei dem die Membranen 31 an zueinander entgegengesetzten Enden eines Halteteils 35 festgelegt sind, das als Hohlkörper ausgebildet ist und zusammen mit den Membranen 31 den das kompressible Befüllmedium beinhaltenden Raum 37 begrenzt. Beim gezeigten Ausführungsbeispiel ist für die Befüllung des Raums 37 mit Stickstoffgas ein Füllventil 39 vorgesehen. Es versteht sich, dass eine andersartige Fülleinrichtung vorgesehen sein kann, wenn ein andersartiges Befüllmedium, beispielsweise in nicht gasförmiger Form, wie ein Schaumstoff od. dgl., benutzt wird. In ähnlicher Weise, wie bei Membranspeichern üblich, weisen die Membranen 31 eine Randverdickung 41 auf, die in einer am jeweiligen Endrand des Halteteils 35 gebildeten Ausnehmung 43 sitzt. Für jede Membran 31 ist ein Stützkörper 45 vorgesehen, der sich entlang der Außenseite der jeweiligen Membran 31 erstreckt und Fluiddurchlässe aufweist. Beim gezeigten Beispiel ist als Stützkörper 45 ein schalenförmiges Lochblech vorgesehen, dessen Endrand 46 den zugewandten Endbereich 47 des Halteteils 33 übergreift und daran befestigt ist, beispielsweise durch Schweißen. Anstelle des Lochbleches könnte auch eine Netz- oder Gitterstruktur als Stützkörper 45 vorgesehen sein. Zur Festlegung der Ausgleichseinrichtung ist der Stützkörper 45 der in der Figur obenliegenden Membran 31 mittels einer Befestigungsschraube 49 mit dem Aufnahmeteil 33 verschraubt, so dass die gesamte Ausgleichseinrichtung eine Baueinheit bildet, die, beispielsweise für die Befüllung des Raums 37 mit Arbeitsgas, über die Öffnung 21 der oberen Endkappe 15 herausnehmbar ist, deren Öffnungsdurchmesser geringfügig größer ist als der Durchmesser des Aufnahmeteils 33 und des den gleichen Außendurchmesser aufweisenden runden Halteteils 35. Als Werkstoff für die Membranen 31 kann für einen Betrieb mit aggressiven Fluiden, wie Harnstofflösungen, ein mit diesen Fluiden kompatibles Elastomer, wie Ethylen-Propylen-Dien-Kautschuk (EPDM) oder hydrierter Acrylnitrilbutadien-Kautschuk (HNBR) vorgesehen sein. Bereits für Membranspeicher gefertigte Membranen stehen aus diesen Werkstoffen zur Verfügung, so dass für die erfindungsgemäße Filtervorrichtung auf vorhandene Gleichbauteile in kostengünstiger Weise zurückgegriffen werden kann.

## Patentansprüche

1. Filtervorrichtung zum Filtern von Fluid, insbesondere in Form einer wässrigen Harnstofflösung, mit einem Filtergehäuse (1) und einem darin angeordneten Filterelement (11) sowie einem Ausgleichselement (31) zum Kompensieren von Druck- und/oder Volumenschwankungen des Fluids, wobei als Ausgleichselement mindestens eine elastisch nachgiebige Membran (31) eingesetzt ist, deren Membranwand in einem Halteteil (35) gehalten eine Trennung zwischen dem Fluid und einem kompressiblen Befüllmedium, wie einem Arbeitsgas, vornimmt, **dadurch gekennzeichnet, dass** das Halteteil (35) eine Fülleinrichtung in Form eines Füllventils (39) für das kompressible Befüllmedium aufweist.

2. Filtervorrichtung nach Anspruch 1, **dadurch gekennzeichnet, dass** die Membran (31) auf der stromabwärtigen Filtratseite (37) des Filterelements (11) angeordnet ist.

3. Filtervorrichtung nach Anspruch 1 oder 2, **dadurch gekennzeichnet, dass** die Membran (31) schalen-, kalotten- oder kuppelartig ausgebildet ist und aus Ethylen-Propylen-Dien-Kautschuk (EPDM) oder aus hydriertem Acrylnitrilbutadien-Kautschuk (HNBR) besteht.

4. Filtervorrichtung nach einem der vorstehenden Ansprüche, **dadurch gekennzeichnet, dass** am Rand der Membran (31) eine Verdickung (41) vorgesehen ist, die in eine zuordenbare Ausnehmung (43) am Halteteil (35) formschlüssig eingreift.

5. Filtervorrichtung nach Anspruch 3 oder 4, **dadurch gekennzeichnet, dass** die schalenförmige Membran (31) vergleichbar zu einer Membran ist, wie sie bei Membran-Hydrospeichern Verwendung findet.

6. Filtervorrichtung nach einem der vorstehenden Ansprüche, **dadurch gekennzeichnet, dass** der Außenkontur der Membran (31) im Wesentlichen nachfolgend auf deren Außenseite ein zumindest teilweise fluiddurchlässiger Stützkörper (45) angeordnet ist.

7. Filtervorrichtung nach einem der vorstehenden Ansprüche, **dadurch gekennzeichnet, dass** das Ausgleichselement zwei gleich ausgebildete Membranen (31) aufweist, die auf gegenüberliegenden Seiten des Halteteiles (35) festgelegt sind, das, als Hohlteil ausgebildet, als Befüllmedium ein Arbeitsgas, vorzugsweise in Form von Stickstoffgas, aufnimmt.

8. Filtervorrichtung nach einem der vorstehenden Ansprüche, **dadurch gekennzeichnet, dass** das Ausgleichselement (31) mit einem vorgebbaren radialen Abstand von einem zylindrischen Stützrohr (27) mit Fluiddurchlässen umfasst ist, an dem sich außenumfangsseitig das Filtermedium (13) des Filterelements (11) abstützt.

9. Filtervorrichtung nach einem der vorstehenden Ansprüche, **dadurch gekennzeichnet, dass** das Filterelement (11) zwei Endkappen (15, 17) aufweist, zwischen denen sich das vorzugsweise plissierte, mehrlagige Filtermedium (13) erstreckt, von denen mindestens eine (17) zur Vermeidung von Totvolumen das Filtergehäuse (1) zumindest teilweise, vorzugsweise bodenseitig ausfüllt und/oder die andere Endkappe (15) von einem Aufnahmeblock (33) für das Halten des Ausgleichselements (31) innerhalb des Filtergehäuses (1) durchgriffen ist, der vorzugsweise temperierbar ist.

## Claims

1. Filter device for filtering fluid, in particular in the form of an aqueous urea solution, having a filter housing (1) and a filter element (11) arranged therein as well as a compensating element (31) for compensating pressure and/or volume fluctuations of the fluid, wherein at least one elastically yielding diaphragm (31) is used as the compensating element, the diaphragm wall of which diaphragm, held in a retaining part (35), creates a separation between the fluid and a compressible filling medium, such as a working gas, **characterised in that** the retaining part (35) has a filling device in the form of a filling valve (39) for the compressible filling medium.

2. Filter device according to claim 1, **characterised in that** the diaphragm (31) is arranged on the downstream filtrate side (37) of the filter element (11).

3. Filter device according to claim 1 or 2, **characterised in that** the diaphragm (31) is formed in the shape of a shell, cup or dome and consists of ethylene propylene diene monomer rubber (EPDM) or hydrogenated acrylonitrile butadiene rubber (HNBR).

4. Filter device according to one of the preceding claims, **characterised in that** a thickening (41), which engages positively in an associated recess (43) on the retaining part (35), is provided on the edge of the diaphragm (31).

5. Filter device according to claim 3 or 4, **characterised in that** the shell-shaped diaphragm (31) is comparable to a diaphragm as used in hydraulic diaphragm accumulators.

6. Filter device according to one of the preceding claims, **characterised in that** an at least partially fluid-permeable supporting body (45) is arranged substantially following the outer contour of the diaphragm (31) on the outside thereof.

7. Filter device according to one of the preceding claims, **characterised in that** the compensating element has two identically formed diaphragms (31) which are fixed on opposing sides of the retaining part (35) which, formed as a hollow part, receives a working gas, preferably in the form of nitrogen gas, as the filling medium.

8. Filter device according to one of the preceding claims, **characterised in that** the compensating element (31) is encompassed at a predefinable radial distance by a cylindrical supporting tube (27) with fluid passages, on which supporting tube the filter medium (13) of the filter element (11) is supported on the outer circumference.

9. Filter device according to one of the preceding claims, **characterised in that** the filter element (11) has two end caps (15, 17), between which the preferably pleated, multi-layer filter medium (13) extends, of which at least one end cap (17) fills the filter housing (1) at least partially, preferably at the bottom, to prevent dead volume and/or the other end cap (15) is penetrated by a receiving block (33) for holding the compensating element (31) inside the filter housing (1), which receiving block can be temperature-controlled.

## Revendications

1. Dispositif (1) de filtration pour filtrer du fluide, notamment sous la forme d'une solution aqueuse d'urée, comprenant une enveloppe (1) de filtre et un élément (11) de filtre qui y est disposé, ainsi qu'un élément (31) de compensation pour la compensation de fluctuations de pression et/ou de volume du fluide, dans lequel il est utilisé comme élément de compensation au moins une membrane (31) cédant élastiquement, dont la paroi, maintenue dans une partie (35) de maintien, effectue une séparation entre le fluide et un milieu de remplissage compressible, comme un gaz de travail, **caractérisé en ce que** la partie (35) de maintien a un dispositif de remplissage sous la forme d'une soupape (39) de remplissage pour le milieu de remplissage compressible.

2. Dispositif de filtration suivant la revendication 1, **caractérisé en ce que** la membrane (31) est disposée du côté (37) du filtrat en aval de l'élément (11) de filtre.

3. Dispositif de filtration suivant la revendication 1 ou 2, **caractérisé en ce que** la membrane (31) est constituée en étant de type à coque, à calotte ou à coupelle et est en caoutchouc éthylène-propylène diène (EPDM) ou en caoutchouc acrylanitrilbutadiène hydraté (HNBR).

4. Dispositif de filtration suivant l'une des revendications précédentes, **caractérisé en ce qu'**il est prévu au bord de la membrane (31) un épaississement (41), qui pénètre à complémentarité de forme dans un évidement (43) conjugué de la partie (35) de maintien.

5. Dispositif de filtration suivant la revendication 3 ou 4, **caractérisé en ce que** la membrane (31) en forme de coque est comparable à une membrane telle qu'on en utilise pour des accumulateurs hydrauliques à membrane.

6. Dispositif de filtration suivant l'une des revendications précédentes, **caractérisé en ce que** le contour extérieur de la membrane (31) est disposé en suivant sensiblement sur sa face extérieure un corps (45) d'appui perméable aux fluides au moins en partie.

7. Dispositif de filtration suivant l'une des revendications précédentes, **caractérisé en ce que** l'élément de compensation a deux membranes (31) constituées pareillement, qui sont fixées à des côtés opposés de la parties (35) de maintien, laquelle, constituée en partie creuse, reçoit comme milieu de remplissage un gaz de travail, de préférence sous la forme d'azote gazeux.

8. Dispositif de filtration suivant l'une des revendications précédentes, **caractérisé en ce que** l'élément (31) de compensation est entouré à une distance radiale pouvant être donnée à l'avance d'un tuyau (27) cylindrique d'appui ayant des traversées pour le fluide, sur lequel s'appuie du côté du pourtour extérieur le milieu (13) filtrant de l'élément (11) de filtre.

9. Dispositif de filtration suivant l'une des revendications précédentes, **caractérisé en ce que** l'élément (11) de filtre a deux coiffes (15, 17) d'extrémité, entre lesquelles s'étend le milieu (13) filtrant, de préférence plissé à plusieurs couches, dont l'une (17) au moins remplit au moins partiellement de préférence du côté du fond l'enveloppe (1) du filtre pour éviter des volumes morts et/ou l'autre coiffe (15) d'extrémité est prise par un bloc (33) de réception pour le maintien de l'élément (31) de compensation à l'intérieur de l'enveloppe (1) du filtre, qui peut de préférence être mis en température.
